# EUROPEAN PATENT SPECIFICATION

(11) **EP 0 333 389 B1**
(45) Date of publication and mention of the grant of the patent: **18.01.1995**
(21) Application number: 89302396.0
(22) Date of filing: 10.03.1989
(51) Int. Cl.: B29B 13/02

(54) **Improvements in or relating to autoclaves**
Autoklav
Autoclave

(30) Priority: 10.03.1988 GB 8805705
(43) Date of publication of application: 20.09.1989
(73) Proprietor: FARLEYDENE LIMITED, Hamworthy Poole BH15 4JW (GB)
(72) Inventor: Toll, Ian Cecil, Poole Dorset (GB)
(74) Representative: Cooke, William Douglas

(56) References cited:
- WO-A-84/04725
- DE-A- 2 504 436
- FR-A- 2 482 261
- US-A- 3 887 325
- US-A- 4 423 765
- US-A- 4 423 765

## Description

The present invention relates to an autoclave particularly, but not exclusively intended for the curing of fibre reinforced plastics materials.

### BACKGROUND OF THE INVENTION

In the production of articles made from carbon fibre/resin mixtures having high fibre contents and requiring cure at temperatures of up to 500°C it is essential to have an autoclave whose temperature can be controlled very accurately. The temperatures involved are higher than can conveniently be reached with steam heated autoclaves and the use of live steam at high pressure requires elaborate and expensive safety equipment. Electrically heated autoclaves are more commonly employed for curing articles of this kind, but are expensive to install and operate and suffer from the additional problem that if a heating element fails while the autoclave is in the middle of a cure cycle the element cannot be replaced and the whole batch of material being treated may be lost. In the case of high value materials such as carbon fibre this is a serious problem.

Our Patent Specification No. W0 84/04725 described an autoclave suitable for the treatment of fibre reinforced plastics materials requiring to be cured at high temperatures with accurate temperature control. It provided an autoclave for the heat treatment of fibre reinforced plastics materials comprising a gas-tight tank having at least one closed flow loop defined by a heat-exchange pipe that was exposed to the interior of the tank and had an inlet and an outlet accessible from outside the tank and a fan inside the tank for circulating gas within the furnace to exchange heat with the heat-exchange pipe. The or each closed flow loop had a gas burner connected to the inlet and an air impeller connected to the outlet and was operable to suck burnt gas through the loop. The flow loop or loops were operable to heat the autoclave to a working temperature of up to 500°C. Temperature sensing means extending through the wall of the tank responded to the temperature of the gas therein. A control unit responsive to the state of the temperature sensor was operably connected to the or each gas burner to turn the or each burner on or off so as to maintain the temperature rise of the gas in the autoclave within 1% of the intended value.

The capacity of the gas-heated flow loops to give the required accuracy of temperature control and the required working temperature enabled fibre-reinforced plastics materials to be cured in an autoclave in a successful and reproducible manner. The autoclave was of simple and inexpensive construction and did not require elaborate safety precautions because the heating unit could be a well established natural gas or propane burner and the flue gas left the impeller at a comparatively low temperature and not under pressure. Moreover the or each gas burner was mounted outside the autoclave where in the event of failure it could be removed and replaced in a matter of minutes so that loss of a charge of components was no longer an inevitable consequence of burner failure.

### SUMMARY OF THE INVENTION

We have now devised a further improved autoclave for the heat treatment of fibre reinforced plastics materials comprising a gas-tight tank having at least one closed flow loop defined by a heat-exchange pipe that is exposed to the interior of the tank and has an inlet and an outlet accessible from outside the tank and a fan inside the tank for circulating gas within the furnace to exchange heat with the heat-exchange pipe, the or each closed flow loop having a gas burner connected to the inlet and an air mover means connected to the outlet and operable to suck burnt gas through the loop, characterised in that the air mover means is an electrically driven fan having an outlet for discharge of compressed air, the fan having speed control means for running the fan at a slow speed creating a negative pressure in the loop when the burner is running and adjusting the speed control means to run at a high speed when the burner is immobilised.

In one embodiment the air mover means is an electrically driven variable speed fan connected to at least one heat exchange pipe, said fan being associated with an electro-mechanically controlled solenoid operated pneumatic valve attached to the burner to regulate the flow of air to the burner.

### DESCRIPTION OF PREFERRED FEATURES

Advantageously the flow loops now serve the dual purpose of heating and of cooling the autoclave, being arranged for a relatively small gas flow therethrough for heating the autoclave and a larger gas flow therethrough for cooling the autoclave. For this purpose, in a preferred construction, each flow loop terminates in a pair of air movers in tandem, an upstream air mover having an annular compressed air discharge port having a relatively small gap for to give a first ratio of induced air flow to compressed gas flow and a downstream air mover having an annular compressed air discharge port having a relatively large air discharge gap to give a second larger ratio of induced gas flow to compressed air flow.

Rubber vulcanising tanks had been known from Patent Specification Nos GB-A-477607, GB-A-754859 and FR-A-452015 in which steam passes through closed loop pipes to heat the air within the furnace which is circulated by a fan, but steam provides inadequate temperatures. US-A-3187799 discloses a gas burner heating a gas-filled radiant tube but not in the context of a fan assisted autoclave and not with an impeller to draw gas through the radiant tube.

The tank may be generally circular, is mounted with its axis horizontally and is closed at its mouth with an access door or port, the or each heat exchange pipe taking a sinuous path and entering and leaving the tank through the end wall thereof. Preferably there are at least two heat exchange loops mounted to opposed sides of the tank, each heat exchange loop making two passes along the tank and back and arranged so that a horizontal diameter between the two passes of the opposed loops is unobstructed for a substantial distance from the tank mouth whereby articles having substantially the full diameter of the tank may be inserted. An additional heat exchange loop may be provided in the floor. Preferably each heat exchange pipe enters and leaves the tank through a flanged sleeve and has flanges that are fastened to the flanges of the inlet and outlet end sleeves whereby said heat exchange pipes are removably retained in the autoclave.

### BRIEF DESCRIPTION OF DRAWINGS

An embodiment of the invention will now be described by way of example only with reference to the accompanying drawings, in which:
Figure 1 is a longitudinal vertical section of a gas fired autoclave having three heating circuits;

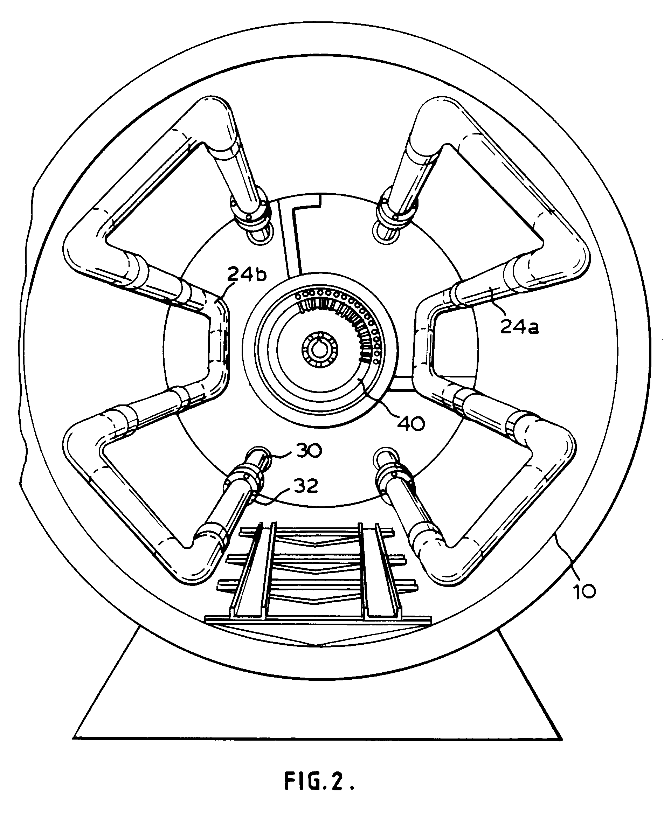

Figure 2 is a view of the interior of an autoclave similar to Figure 1 but having only two heating circuits;
Figure 3 is a fragmentary perspective view of an alternative embodiment of the air and gas control means;
Figure 4 is a detailed perspective view of an electric motor driven variable speed fan, and
Figure 5 is an end view of a burner unit fitted with an air control valve.

### DETAILED DESCRIPTION OF PREFERRED EMBODIMENTS

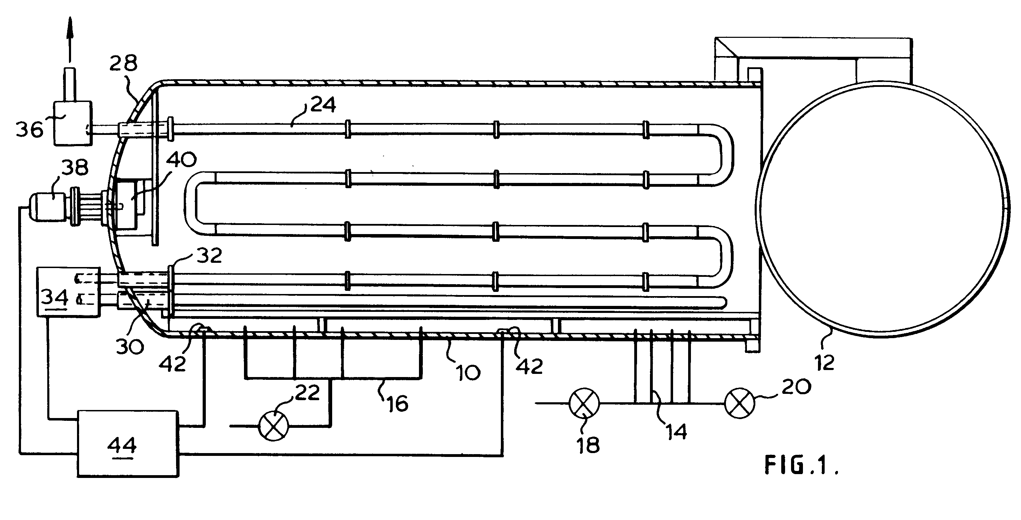

In Figure 1 an autoclave tank structure 10 that may typically be about 12 feet (3.658 metres) in length and diameter about 5 feet (1.524 metres) has a loading door 12. Vacuum lines 14 are provided for connection to the mould side of a mould former (not shown) having a flexible diaphragm thereover and connectable through valve 18 to vacuum and through valve 20 to air for purposes that will be described hereinafter. Pressure lines 16 are also provided with a control valve 22 cross-linked to the door 12 so that the interior of the autoclave cannot be pressurised with the door open.

The interior of the autoclave tank is provided with exposed heater tubes 24 running the length of the tank in serpentine manner as shown and divided into side sets 24a, 24b and an optional bottom set (not shown), each set defining a closed gas flow loop that enters and leaves through the end wall 28. The tubes 24 are of bore typically 2-2.5 inches (5.080-6.350 cm) and are fabricated of mild steel or stainless steel or any other material resistant to high temperatures, eg. up to 100°C and may be of an austenitic chrome/nickel stainless steel sold under the trade name Sandvick 253 MA. The tubes 24 may be coated on their exterior surfaces with sprayed on aluminium metal or other coating material that promotes increased efficiency of surface radiation.

The tubes 24 are removably mounted in the autoclave tank by means of flanged sleeves 30 and welded-on flanges 32. The entry side of each tube 24 is provided with a gas fired heater 34 including a gas burner, a regulator valve to sense gas flow and maintain combustion, and an ignition system. The flue outlet from the burner is directly connected by a sleeve to the inlet to the respective tube 24 in such a manner that the heater 34 can be replaced rapidly in the event of boiler failure. The heater 34 may be a so-called "shape flame burner" which incorporates a blower in the burner head. Fan assistance forces the flame together with the flue gases through the heater tubes 24. A burner of this type can be fired by natural or propane gas or by oil.

The discharge end of the tube 24 is provided with a Coander air mover 36 by which a negative pressure is produced towards said discharge end of the tube 24 to maintain a flow of flue gas therethrough. The Coander air mover replaces the electric motor powered centrifugal exhaust fan of our Patent Specification No. Wo 84/04725. Spent flue gas from the air mover 36 may be vented through an ordinary flue. The number of independent heater circuits constituted by heater 34, flow tube 24 and air mover 36 may be varied depending upon the capacity of the intended heater 34, the size of the autoclave tank and operational convenience but normally there will be at least two independent circuits. The provision of two loops aids heat distribution, and in the embodiment shown the tube loops 24b, 24c are configured so that a plate can be inserted horizontally to the maximum diameter of the tank 12. The burner power should, of course, be correlated with the bore of the tubes 24 and the length to the first elbow therein so that an unacceptable heat build up at the first elbow does not take place. Where the length of the autoclave is sufficient, usually more than 30-40 feet (9.144-12.801 metres) the tubes 24 may be straight and may simply exit via an elbow through the tank wall 10. A motor 38 mounted on the tank end wall is operatively connected to a radial flow impeller 40 within the tank 10 to produce circulatory gas flow with the autoclave tank.

The tank 10 may be insulated with mineral or ceramic wool and covered with a metal sheath. Thermocouples 42 through the tank wall 10 responsive to the gas temperature are connected to a control unit 44 which is operatively connected to the several heaters 34 to turn them on or off to maintain a preset temperature in the autoclave. The control unit 44 may also be operatively connected to motor 38 so that the said motor 38 and fan 40 always run when the heaters 34 are operational. A time delay relay in the ignition system of heater 34 responds to signals from the control unit 44 so that the heater 34 is switched on only after the control thermocouple has indicated a temperature below the rated temperature for a predetermined time period, thereby preventing short duration ON-OFF cycles of the heater 34.

For the hot moulding of fibre reinforced plastics components, a mould form with laid up resin, bleeder cloth and pressure plate is enclosed in a vacuum bag introduced into the autoclave and the vacuum bag connected to lines 14. Vacuum is applied and heat is applied to the furnace to typically about 250°F (121.11°C) at a preset heat up rate of 1-5°F (0.55 -2.8°C) per minute. A first dwell period of 30-60 minutes is required for resin gelation and when the resin flow characteristics are correct pressure of from 6-7 bar is applied from the interior of the vessel using the line 16 so as to form the moulding and at an appropriate time after the pressure has stabilised the vacuum is switched off and the temperature in the furnace is raised through a second heat-up ramp to the cure temperature, typically 350°C which is maintained for an appropriate time. After cure is complete the autoclave is cooled either naturally or by air cooling, cool air being blown by another impeller through the tubes 24 or by running air mover 36 with heater 34 off to draw cool air into the tubes 34.

At the point when the heater system is switched on, a solenoid valve opens allowing low volume low pressure compressed air (typically 2.5 CFM at 18 psi). The inlet side of air mover 36 is connected directly to the exhaust end of heater tube 24a or 24b. The outlet of air mover 36 is connected to a chimney or gas flue outlet as mentioned above. The heater 34 is now controlled by a vacuum switch, and supply of compressed air to air mover 36 reduces the pressure in tube 24a or 24b and causes the heater 34 to ignite. The flue gases are pulled through the tube 24a or 24b and through the air mover 36 to atmosphere. The compressed air fed to air mover 36 is regulated to provide an appropriate gas/air mixture for combustion without pulling the flame off the burner head.

On completion of the heating cycle, the burner gas flow valve and ignition pack are isolated and a solenoid or other switching device on the vacuum switch sensing tube is activated to protect the switch from excessive vacuum levels. The flow of primary compressed air to the air mover 36 is increased (typically to 60 psi at 10 CFM). The increased compressed air flow results in an increased air flow through the air mover 36. The ratio of compressed air volume to induced air flow through heater tube 24a or 24b and air mover 36 is about 10:1. As a result, it is practical to use the same tubes 24a, 24b both as heating tube and for passing air or other heat sink fluid for cooling purposes, each tube passing about 100 CFM of cooling air from the environment. A practical autoclave system can typically have four burners, giving a total cooling air flow of 400 CFM.

If desired the air movers 36 may be cascaded for greater effect during the cooling cycle. The flow multiplying power of the air mover 36 provides the most economic consumption of compressed air whilst in the heating mode, the air mover 36 is set with a 0.003" clearance. When the air pressure is increased in the cooling mode, the ratio of compressed air flow to induced air flow is 1:10 as previously stated. But by increasing the annulus clearance to 0.006", the ratio of compressed air flow to induced air flow may be increased to about 1:15. In the combustion mode the consumption of compressed air at 0.006" clearance would be disproportionate and excessive. It is therefore desirable for autoclaves where the same tubes 24a, 24b serve for heating and cooling to be fitted with two air movers per outlet fastened one behind the other, the first air mover having the lesser clearance and the second air mover having the greater clearance. This provides for the most efficient use of compressed air in the heating mode combined with the highest volume flow of ambient air in the cooling mode.

The pressures and volumes employed are, of course, independently adjustable to suit individual burner and temperature ranges. The system can provide for a dramatic increase in exhaust gas temperature compared to when an electric fan is used, the available range of exhaust gas temperature being from 250°C to 600°C.

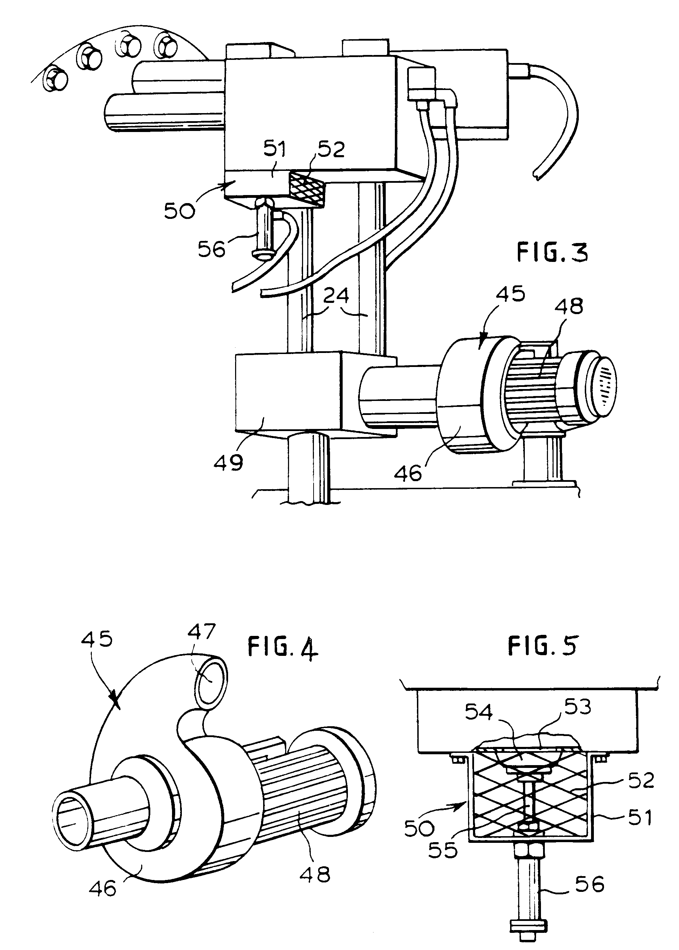

In an alternative embodiment of the invention, shown in Figures 3 to 5, the air mover means is an electrically driven variable speed fan 45 connected with the outlet from a tube 24. The fan is located in a housing 46 with an exhaust outlet 47 (see Figure 4) and is driven by a variable speed electric motor 48. The fan 45 may be connected to two tubes 24 via a manifold 49. The fan 45 is associated with an electro-mechanically controlled solenoid operated pneumatic valve generally indicated at 50 (see Figure 5). The valve is mounted in a housing 51 with an open lattice work structure 52 at each end to allow for the passage of air through the valve when in the open position. The valve housing is bolted to the underside of a burner 34 which has an aperture 53 in the burner housing which may be opened or closed by a valve member 54. The valve member is mounted on a stem 55 which extends into a pneumatically operated member 56 under electronic control.

The fan 45 runs at a slow speed creating a negative pressure in the tube 24 when the burner 34 is running and runs at a high speed when the burner is immobilized. On completion of the heating cycle the autoclave under electronic control switches the fan 45 to suck the gases from the tubes 24 via the manifold 49 into the atmosphere. To assist the cooling process the solenoid operated valve is opened to allow the flow of an increased air supply to the burner. The combined action of the fan and the additional supply of air results in a rapid cooling of the autoclave heating chamber.

It will be appreciated that various modifications may be made to the described embodiment without departing from the invention, the scope of which is defined in the appended claims.

## Claims

1. An autoclave for the heat treatment of fibre reinforced plastics materials comprising a gas-tight tank (10) having at least one closed flow loop defined by a heat-exchange pipe (24) that is exposed to the interior of the tank (10) and has an inlet and an outlet accessible from outside the tank (10) and a fan (40) inside the tank (10) for circulating gas within the furnace to exchange heat with the heat-exchange pipe (24), the or each closed flow loop having a gas burner (34) connected to the inlet and an air mover means (36) connected to the outlet and operable to suck burnt gas through the loop, characterised in that the air mover means (36) is an electrically driven fan (45) having an outlet for discharge of compressed air, the fan (45) having speed control means (48) for running the fan (45) at a slow speed creating a negative pressure in the loop when the burner (34) is running and adjusting the speed control means (48) to run at a high speed when the burner (34) is immobilised.

2. An autoclave according to Claim 1, characterised in that the air mover means (36) is an electrically driven variable speed fan (45) connected to at least one heat exchange pipe (24), said fan being electronically controlled by an electro-mechanically controlled solenoid operated pneumatic valve (50) attached to the burner (34) to regulate the flow of air to the burner (34).

3. An autoclave according to Claim 2, characterised in that the fan (45) is connected to two heat exchange pipes (24) via a manifold (49).

4. An autoclave according to Claims 2 or 3, characterised in that the valve (50) is bolted to the underside of the burner (34) and closes an aperture (53) in the burner wall, the valve being located in a housing (51) with an open lattice work structure (52) at each end.

5. An autoclave according to Claim 1 or 2, characterised in that the flow loops are arranged for a relatively small gas flow therethrough for heating the autoclave and a larger gas flow therethrough for cooling

## Patentansprüche

1. Autoklav zur Wärmebehandlung von faserverstärkten Kunststoffmaterialien mit einem gasdichten Tank (10), der wenigstens eine geschlossene Durchströmungsschleife aufweist, die von einem Wärmeaustauschrohr (24) definiert ist, welches innerhalb des Tanks (10) angeordnet ist und einen außerhalb des Tanks (10) zugänglichen Eingang und Ausgang aufweist und mit einem Gebläse (40) innerhalb des Tanks (10) zum Zirkulieren von Gas innerhalb des Ofens zum Wärmeaustausch mit dem Wärmeaustauschrohr (24), wobei die oder jede geschlossene Durchströmungsschleife einen mit dem Eingang verbundenen Gasbrenner (34) und Luftmotormittel (36) aufweist, die mit dem Ausgang verbunden sind und betätigbar sind, um verbranntes Gas durch die Schleife zu saugen,
dadurch gekennzeichnet,
daß die Luftmotormittel (36) von einem elektrisch angetriebenen Gebläse (45) mit einem Ausgang zur Entladung von komprimierter Luft gebildet sind, wobei das Gebläse (45) Geschwindigkeitssteuermittel (48) zum Antrieb des Gebläses (45) mit einer geringen Geschwindigkeit zur Erzeugung eines negativen Drucks in der Schleife, wenn der Brenner (34) läuft, und zur Einjustierung der Geschwindigkeitssteuermittel (48) zum Laufen mit einer hohen Geschwindigkeit aufweist, wenn der Brenner (34) immobilisiert ist.

2. Autoklav nach Anspruch 1,
dadurch gekennzeichnet,
daß die Luftmotormittel (36) von einem elektrisch angetriebenen, mit variabler Geschwindigkeit laufenden Gebläse (45) gebildet sind, welches wenigstens mit einem Wärmeaustauschrohr (24) verbunden ist, wobei das Gebläse durch ein von einer elektro-mechanisch gesteuerten Magnetspule betätigtes pneumatisches Ventil (50) elektronisch steuerbar ist, welches am Brenner (34) zur Regelung des Luftflusses zum Brenner (34) angeordnet ist.

3. Autoklav nach Anspruch 2,
dadurch gekennzeichnet,
daß das Gebläse (45) mit zwei Wärmeaustauschrohren (24) über einen Verteiler (49) verbunden ist.

4. Autoklav nach Anspruch 2 oder 3,
dadurch gekennzeichnet,
daß das Ventil (50) an der Unterseite des Brenners (34) angeschraubt ist und eine Öffnung (53) in der Brennerwand verschließt, wobei das Ventil in einem Gehäuse (51) mit einer offenen Gitterwerkstruktur (52) an jedem Ende angeordnet ist.

5. Autoklav nach Anspruch 1 oder 2,
dadurch gekennzeichnet,
daß die Durchströmungensschleifen für einen relativ geringen Gasdurchfluß durch diese zur Erhitzung des Autoklaves und für einen größeren Gasdurchfluß durch diese zur Kühlung ausgebildet sind.

## Revendications

1. Autoclave pour le traitement à chaud de matériaux en plastique renforcé par des fibres, comportant un réservoir étanche au gaz (10) ayant au moins une boucle d'écoulement fermée définie par une conduite d'échange de chaleur (24) qui est exposée à l'intérieur du réservoir (10) et comporte une entrée et une sortie accessible de l'extérieur du réservoir (10), et un ventilateur (40) placé dans le réservoir (10) pour la circulation du gaz à l'intérieur du four afin d'échanger la chaleur avec la conduite d'échange de chaleur (24), la boucle ou chaque boucle d'écoulement fermée ayant un brûleur à gaz (34) connecté à l'entrée, et des moyens de déplacement d'air (36) connectés à la sortie et destinés à aspirer le gaz brûlé à travers la boucle, caractérisé en ce que les moyens de déplacement d'air (36) sont un ventilateur entraîné électriquement (45) ayant une sortie pour la détente de l'air comprimé, le ventilateur (45) comportant des moyens de commande de vitesse (48) pour faire tourner ce ventilateur (45) à une vitesse lente et créer une pression négative dans la boucle lorsque le brûleur (34) fonctionne, et pour ajuster les moyens de commande de vitesse (48) pour un fonctionnement à vitesse rapide lorsque le brûleur (34) est immobilisé.

2. Autoclave selon la revendication 1, caractérisé en ce que les moyens de déplacement d'air (36) sont un ventilateur à vitesse variable (45) entraîné électriquement et connecté à au moins une conduite d'échange de chaleur (24), le ventilateur étant commandé électroniquement par une soupape pneumatique manoeuvrée par un solénoïde (50) commandé électromécaniquement et attaché au brûleur (34) pour réguler l'écoulement d'air vers le brûleur.

3. Autoclave selon la revendication 2, caractérisé en ce que le ventilateur (45) est connecté à deux conduites d'échange de chaleur (24) par l'intermédiaire d'une tubulure (49).

4. Autoclave selon les revendications 2 ou 3, caractérisé en ce que la soupape (50) est boulonnée sur le dessous du brûleur (34) et ferme une ouverture (53) dans la paroi du brûleur, la soupape étant située dans un logement (51) avec une structure de travail à treillis ouvert (52) à chaque extrémité.

5. Autoclave selon la revendication 1 ou 2, caractérisé en ce que les boucles d'écoulement sont disposées pour un écoulement de gaz relativement petit pour le chauffage de l'autoclave, et pour un écoulement de gaz plus grand pour le refroidissement.
